# EUROPÄISCHE PATENTANMELDUNG

(11) **EP 0 676 375 A2**
(43) Veröffentlichungstag der Anmeldung: **11.10.1995**
(21) Anmeldenummer: 95105183.8
(22) Anmeldetag: 06.04.1995
(51) Int. Cl.: C02F 1/78

(54) **Anlage zur Aufbereitung von Trinkwasser aus Rohwasser**

(30) Priorität: 09.04.1994 CH 1044/94
(71) Anmelder: Neuenschwander, Peter, CH-6331 Hünenberg (CH)
(72) Erfinder: Neuenschwander, Peter, CH-6331 Hünenberg (CH)
(74) Vertreter: OK pat AG

(57) **Zusammenfassung**

Anlage zum Aufbereiten von Trinkwasser aus Rohwasser. Die Anlage (**200**) weist einen Aufbereitungstank (**202**) auf, welchem Rohwasser zugeführt wird. Ein Ozongenerator einer Baugruppe (**150**) produziert Ozon (O ), mittels welchem das Wasser aufbereitet, das heisst ozoniert wird. Dem Ozongenerator sind ein Lufttrockner und ein Feuchtigkeitswächter der Baugruppe (**150**) vorgeschaltet, wobei der Lufttrockner die Umgebungsluft, aus welcher das Ozon gewonnen wird, trocknet, während der Feuchtigkeitswächter anschliessend die Restfeuchtigkeit feststellt und bei zu hoher Restfeuchtigkeit die Anlage abschaltet. Dadurch wird vermieden, dass dem Ozongenerator feuchte Luft zugeführt wird, so dass das erzeugte Trinkwasser keine salpeterhaltige Säuren aufweist.

## Beschreibung

Die Erfindung betrifft eine Anlage zur Aufbereitung von Trinkwasser aus Rohwasser nach dem Oberbegriff des Patentanspruchs **1**.

Die Bereitstellung von Trinkwasser, das allen Anforderungen sowohl quantitativer wie auch qualitativer Art entspricht, ist ein weltweit verbreitetetes Problem, dessen Lösung einen wesentlichen Teil der Basis der gesamten Zivilisation bildet. Entwicklungsländer leiden allgemein unter Wasserknappheit und besonders unter Trinkwasserknappheit, da einerseits oft aus Gründen der Bodenbeschaffenheit und des Klimas das Wasservorkommen gering ist, während andererseits Anlagen zur Wasseraufbereitung und -Verteilung fehlen, unzuverlässig arbeiten oder Wasser von hygienisch ungenügender Qualität liefern.

Fehlen Wasserverteilungsanlagen, so wird im allgemeinen Wasser aus Tankanlagen benutzt, beispielsweise aus Grund- oder Regenwasserzisternen oder aus Grossbehältern, die von Tanklastwagen periodisch gefüllt werden.
Aber auch in Industrieländern bereitet die Trinkwasserversorgung zunehmend Schwierigkeiten, dies infolge der generellen Übernutzung der Ressourcen und der damit einhergehenden Umweltverschmutzung. Zwar sind in dichtbesiedelten Gebieten der Industrieländer Wasserverteilungsanlagen vorhanden, die mit Aufbereitungsanlagen ausgerüstet sind. Dennoch wird oft Wasser geliefert, das den hygienischen Anforderungen nur knapp oder eben nicht mehr entspricht, oder das infolge chemischer desinfektionierender Zusätze einen unangenehmen Beigeschmack hat. Ausserdem besteht stets die Gefahr einer erneuten Wasserverschmutzung bei der Verteilung, beispielsweise in der Folge von Defekten wie Rohrbrüchen usw.

Als Folge aller dieser Probleme wächst der Bedarf an Anlagen zur Aufbereitung von Trinkwasser aus Rohwasser im Bereich des Haushalts. Die Rohwasserzufuhr für solche kleine Anlagen erfolgt aus lokalen Kleinquellen, aus Grund- oder Regenwasserzisternen oder aus Leitungsnetzen, die Wasser von unbefriedigender Qualität liefern. In diesen Anlagen werden je nach Bedarf einzeln oder in Serie verschiedenartige Aufbereitungsvorgänge durchgeführt, beispielsweise mit Filtern zur Entfernung grösserer Partikel, mit Umkehrosmosegeräten zur Entsalzung und mit Aktivkohlefiltern zur weiteren Reinigung. Um hygienisch einwandfreies Wasser zu erhalten, wird seit einiger Zeit anstelle des vorher üblichen Chlorierens ein Ozonieren des Wassers vorgenommen. Ozonierung, in der Literatur auch Ozonisierung bezeichnet, bedeutet die Anlagerung von Ozon, also O an Kohlenstoff. Ozon ist neben Fluor das stärkste bekannte Oxidationsmittel. Mit ihm lassen sich in nahezu perfekter Weise sämtliche Mikroorganismen unschädlich machen, ohne dass das Trinkwasser den unangenehmen Beigeschmack von Chlor erhält. Ozon wird sogar ein angenehmer Geruch zugeschrieben, der an Heu oder nasses Gras nach Sommergewittern erinnern soll.

Ausserdem ist Ozon ein verhältnismässig kostengünstiges Oxidans, das aus der Umgebungsluft gewonnen wird, indem man einen Teil der O -Moleküle in O-Atome spaltet, welche sich dann mit restlichen O -Molekülen zu O -Molekülen verbinden. Bei der Ozonierung fallen auch keine unerwünschten Abfallstoffe an, da Ozon die Neigung hat, wieder zu O zu werden. Unerwünschte Effekte des Ozons auf den menschlichen Körper, der natürlich von Ozon angegriffen wird, vermeidet man, indem man die Restmenge an Ozon, die im Trinkwasser verbleibt, kleinstmöglich bzw. in vorbestimmten Konzentrationen hält oder ganz vermeidet.

Anlagen zur Aufbereitung von Trinkwasser arbeiten entweder im Durchlauf- oder im Chargenbetrieb. Anlagen mit Durchlaufbetrieb sind nur jeweils dann aktiv, wenn an der Verbraucherstelle Wasser entnommen wird. Solche Anlagen arbeiten so, indem sie zugeführtes Rohwasser ozonieren und das so entstandene Trinkwasser sofort dem Konsum zuführen.
Derartige Anlagen besitzen somit keinen Tank für aufbereitetes Wasser, so dass sie verhältnismässig wenig Platz benötigen. Diesem Vorteil steht aber der grosse Nachteil gegenüber, dass eine präzise Kontrolle der Effizienz der Aufbereitung, insbesondere der Ozonierung, unmöglich ist, da eine solche nur in einem Tank oder einem anderen Behälter stattfinden kann. Eine Kontrolle bei fliessendem Wasser ist -insbesondere bei hier zur Diskussion stehenden Klein- bis Kleinstanlagen- unter anderem deshalb unmöglich, weil die zeitliche Wassermenge in Abhängigkeit von Druck und Fliessgeschwindigkeit stark schwankt.
Bei einer Anlage, die im Chargenbetrieb arbeitet, lassen sich Messungen zur Kontrolle der Wirksamkeit der Aufbereitungsmassnahmen dagegen problemlos -mit überblickbarem Aufwand- durchführen. Diese Aussage gilt damit, sowohl bei sogenannten Tisch-Anlagen, die manuell mit Rohwasser gespiesen werden, wie auch bei Über- und Untertisch-Anlagen, die ans Netz angeschlossen werden können um ihr Rohwasser daraus zu beziehen.

Die **US-PS 4,599,166** beschreibt eine Anlage zur Ozonierung von Wasser im Haushalt, die im Chargenbetrieb arbeitet und ans Wasserverteilungsnetz angeschlossen ist. Dabei gelangt das Rohwasser in einem Aufbereitungstank, wo es nach entsprechender Kühlung mittels Ozon behandelt wird, das aus einem Ozongenerator zugeführt wird; das entstehende Trinkwasser wird vor dem Verbrauch durch einen Aktivkohlefilter geleitet, in welchem das restliche Ozon weitestgehend entfernt wird. Zur Erzeugung des Ozons wird ein üblicher Ozongenerator verwendet.

Ozongeneratoren, die für solche Anwendungen geeignet sind, haben die Eigenschaft, nicht nur das erwünschte Ozon zu produzieren, sondern auch Salpetersäure und salpetrige Säure abzugeben, und zwar in steigendem Masse bei zunehmender Feuchtigkeit der zugeführten Umgebungsluft Diese Säuren sind aus mehreren Gründen unerwünscht; so haben säurehaltige Ablagerungen eine Verminderung der Lebensdauer des Ozongenerators zur Folge. Noch unangenehmer ist es, dass die Säuren mit dem Ozon in das Wasser gelangen, so dass sie nach der Ozonierung im Trinkwasser zum Verbraucher gelangen, was für diesen natürlich eine Gefahr bedeutet.

Die Aufgabe der Erfindung wird somit darin gesehen, eine Anlage der eingangs genannten Art zu schaffen, bei welcher das Entstehen von Salpetersäure und salpetriger Säure bzw. deren Vorhandensein im abgegebenen Trinkwasser mit Sicherheit vermieden wird, so dass der Anlage in jeder Beziehung einwandfreies Trinkwasser entnommen werden kann.

Diese Aufgabe wird erfindungsgemäss durch die Merkmale des kennzeichnenden Teils des Anspruch **1**, gelöst.

Vorteilhafte Weiterbildungen der erfindungsgemässen Anlage werden durch die kennzeichnenden Merkmale der weiteren Patentansprüche definiert.

Durch die erfindungsgemäss vorgesehenen Teile der Anlage, nämlich den dem Ozongenerator vorgeschalteten Lufttrockner, den zwischen Lufttrockner und dem Ozongenerator vorgesehenen Feuchtigkeitswächter und die zusätzlichen Komponenten des Steuer- und Überwachungssystems der Anlage für den Lufttrockner und den Feuchtigkeitswächter erzielt man eine wesentliche Verbesserung der Funktionen einer solchen Anlage.

Erstens verhindert der Lufttrockner, dass dem Ozongenerator feuchte Luft zugeführt wird, so dass Salpetersäure und salpeterhaltige Säuren entstehen können. Dadurch erhöht sich die Lebensdauer des Ozongenerators. Man vermeidet zudem, dass im Trinkwasser gelöste Säure vorhanden ist. Zweitens überwacht der Feuchtigkeitswächter den verbleibenden Feuchtigkeitsgehalt der dem Ozongenerator zugeführten Luft, so dass jederzeit festgestellt werden kann, ob der Lufttrockner einwandfrei arbeitet. Drittens erreicht man mit Hilfe der zusätzlichen Komponenten des Steuer- und Überwachungssystems, dass jede Fehlfunktion des Lufttrockners ein selbsttätiges Abschalten der Anlage zur Folge hat. Es liegt auf der Hand, dass nur durch die Kombination der drei neuen Teile der Anlage sichergestellt wird, dass die Abgabe von Trinkwasser mit salpeterhaltiger Säure vermieden wird.

Bei Anlagen, die wie beschrieben, nur einen Aufbereitungstank aufweisen, kann der Verbraucher entweder nicht während längerer Zeit ununterbrochen Trinkwasser beziehen, oder die Anlage, die für Chargenbetrieb konzipiert ist, funktioniert nach einiger Zeit ununterbrochenen Wasserkonsums annähernd nach dem Durchlaufprinzip, was, wie zuvor erwähnt, nicht erwünscht ist. Aus diesem Grunde ist es vorteilhaft, dem Aufbereitungstank einen Vorratstank nachzuschalten, der im allgemeinen einen grösseren Inhalt hat als der Aufbereitungstank. Dies hat auch den Vorteil, dass der Vorratstank, aus welchem das Wasser abgegeben wird, stets sauber ist, im Gegensatz zum Aufbereitungstank, der abwechselnd Wasser verschiedenen Sauberkeitsgrades enthält und der somit häufiger gereinigt werden muss.

Bei kleinen Anlagen, die meist als Tischanlagen ausgebildet sind, wird das Rohwasser auch oft manuell durch eine verschliessbare Öffnung in den Aufbereitungstank gebracht. Solche Tischanlagen benötigen also keinen Wasseranschluss sondern nur einen Anschluss an ein E-Netz. Leistungsfähigere Anlagen werden mit Vorteil an ein Wasserverteilungsnetz angeschlossen und besitzen zusätzliche Komponenten des Steuer- und Überwachungssystems, welche eine automatische Nachfüllung des Aufbereitungstankes bewirken.

Wird während längerer Zeit kein Trinkwasser konsumiert, so ist es möglich, dass das aufbereitete Wasser wieder durch Mikroorganismen verunreinigt, zum Beispiel aus der Luft, weil die Abdichtung des Tanks nicht genügt, oder aber, weil sich kleinste und an sich unschädliche Restmengen solcher Organismen während der Standzeit im Tank vermehrt haben. Um dennoch stets Wasser von höchster Qualität anbieten zu können, wird das bereits aufbereitete Wasser in regelmässigen Zeitabständen einer Reozonierung unterworfen.

Obwohl die Trocknung der Luft durch Wärme erfolgen könnte, zieht man Lufttrockner vor, die nach dem Adsorptionsprinzip arbeiten. Der Hauptgrund für diese apparativ aufwendigere Lösung liegt darin, dass -bei sonst gleichbleibenden Verhältnissen- die Menge des im Ozongenerators produzierten Ozons abnimmt, wenn die Temperatur der zugeführten Luft steigt. Nach dem Adsorptionsprinzip arbeitende Lufttrockner sind so aufgebaut, dass die zu trocknende Luft durch einen Behälter geführt wird, der teilweise mit einem feuchtigkeitsadsorbierenden Stoff in Pillen- oder Granulatform gefüllt ist. Dieser Stoff erschöpft sich, das heisst er nimmt nach einiger Zeit keine weitere Feuchtigkeit mehr auf und muss ersetzt werden. Bisher wurden adsorptiv wirkende Lufttrockner nur in grosstechnischen Wasseraufbereitungsanlagen eingesetzt, wo eine professionelle Wartung für einen rechtzeitigen Ersatz von erschöpftem Adsorptionsstoff vorausgesetzt werden kann. Es herrschte aber die Meinung, dass die Überwachung des Zustandes des Adsorptionsmittels und dessen rechtzeitiger Ersatz durch eine neue Portion nur durch einen Spezialisten durchführbar sei, oder, dass sich beispielsweise Regenerierungen nur ausser Haus durchführen liessen und daher wegen der dabei anfallenden Kosten und Umtriebe nicht zu verantworten seien. Da den Anlagen auch eine automatische Überwachung der Restfeuchtigkeit fehlte, hätte für den Verbraucher nur ein scheinbarer aber kein echter Schutz vor säurehaltigem Wasser bestanden. Diese Bedenken verschwinden aber, wenn man erstens ein geeignetes Adsorptionsmittel wählt, dessen bevorstehende Sättigung durch einen Farbumschlag der Körner oder Pillen des Adsorptionsmittels angezeigt wird, und das durch einfache Erwärmung in einem Haushaltsbackofen regeneriert werden kann, wobei man das Mittel bevorzugt in einem mindestens teilweise transparenten Behälter anordnet, so dass der Farbumschlag beobachtet werden kann; und wenn man zweitens zwischen dem Lufttrockner und dem Ozongenerator einen Feuchtigkeitswächter vorsieht, der kontinuierlich die Restfeuchtigkeit der Luft feststellt und bei Überschreitung eines höchsttolerierbaren Wertes derselben ein optisches und/oder akkustische Warnsignal emittiert und ausserdem die Anlage selbsttätig abschaltet.

Ein geeigneter Feuchtigkeitswächter weist beispielsweise eine Messdose auf, in welcher ein Feuchtigkeitsindikator zum Erfassen der Restfeuchtigkeit sowie ein Detektor zur Beobachtung des Feuchtigkeitsindikators angeordnet sind. Als Feuchtigkeitsindikator eignet sich beispielsweise ein Indikator auf Papierbasis, über den die zu analysierende Luft aus dem Lufttrockner streicht und der so beschaffen ist, dass seine Farbe in Abhängigkeit von der jeweiligen Luftfeuchtigkeit zwischen rot und blau über violett ändert.
Als Detektor kann eine Lichtquelle vorgesehen sein, die auf den Indikator gerichtet ist und ein Photodetektor, der zur Feststellung des reflektierten Strahlungsanteils dient.

Ausserdem ist der Feuchtigkeitswächter mit einer Komponente des Steuerungs- und Überwachungssystems versehen, mittels welcher bei Überschreitung eines Grenzwertes der Luftfeuchtigkeit, wie schon erwähnt, die Anlage still gelegt wird, da es für den Verbraucher günstiger ist gar kein Wasser zu erhalten als säurehaltiges Wasser zu geniessen.

Zur Erhöhung der Sicherheit können weitere Massnahmen getroffen werden. Insbesondere kann man einen Stromwächter vorsehen, mit welchem festgestellt wird, ob die Stromversorgung des Ozongenerators in richtiger Weise erfolgt, damit sichergestellt ist, dass Ozon in genügender Menge produziert wird.

Eine weitere Verbesserung besteht darin, dass ein Luftstromwächter vorgesehen ist, der dazu dient, festzustellen, dass Luft in den Ozongenerator und anschliessend in den Aufbereitungstank gelangt.

Die bisher erwähnten sowie weitere vorteilhafte Ausbildungsformen und Einzelheiten der erfindungsgemässen Anlage zur Aufbereitung von Trinkwasser aus Rohwasser werden im folgenden anhand mehrerer Ausführungsbeispiele und mit Bezug auf die nachfolgenden Zeichnungen ausführlich beschrieben.

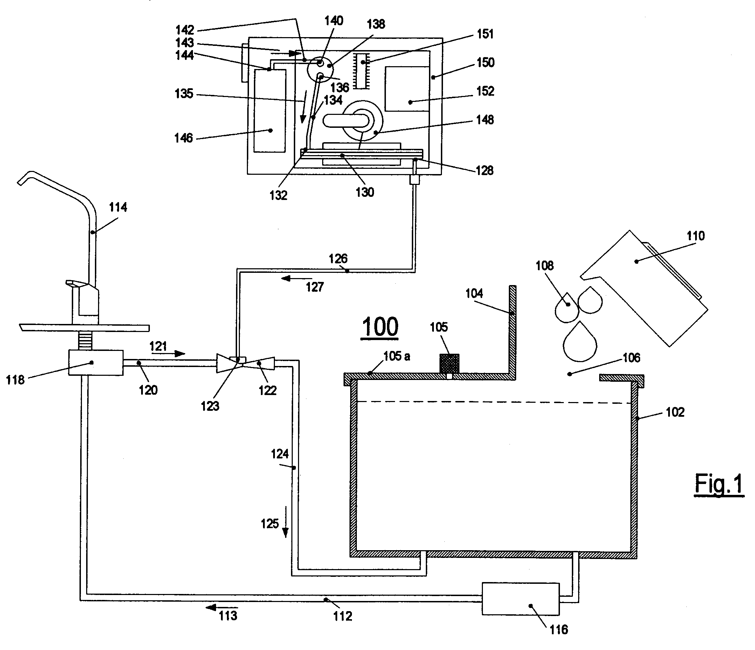

Es zeigen:
- **Fig. 1**: Eine Anlage nach dem Eintanksystem, bei welcher das Rohwasser manuell zugeführt wird, wobei -der Übersichtlichkeithalber- das Steuerungs- und Überwachungs-System weggelassen ist, in vereinfachter, schematischer Darstellung;
- **Fig. 2**: eine Anlage nach dem Zweitanksystem, die an ein Wasserverteilungssystem angeschlossen ist, mit dem zugehörigen Steuerungs- und Überwachungssystem, in vereinfachter, schematischer Darstellung;
- **Fig. 3**: einen Ozongenerator, dem ein Lufttrockner und ein Feuchtigkeitswächter vorangeschaltet sind, in vereinfachter, schematischer Darstellung;
- **Fig. 4**: die Anlage der **Fig. 2** mit einer vorgeschalteten Einrichtung für Umkehrosmose, wobei die Anlage unterhalb eines Haushalts-Spültisches eingebaut ist, in vereinfachter, schematischer Darstellung;
und
- **Fig. 5**: eine Detailzeichnung aus dem elektrischen Schema der Anlage gemäss **Fig. 2**
Die Anlage gemäss **Fig. 1** weist einen Aufbereitungstank **102** auf, der oben eine mittels einer Klappe **104** verschliessbare Öffnung **106** besitzt, durch welche Rohwasser **108** aus einem die Rohwasserquelle bildenden Behälter **110** zugeführt wird. Vom Aufbereitungstank **102** führt eine Wasserleitung **112** zur Verbrauchstelle **114**, die hier als Wasserhahn ausgebildet ist. Diese Wasserleitung **112** weist eine Pumpe **116** auf, welche das Wasser in Richtung des Pfeils **113** fördert. Die Wasserleitung **112** führt zu einem Dreiwegventil **118**, das aus einer Verbraucherstellung, in der es den Aufbereitungstank **102** mit der Verbraucherstelle **114** verbindet, umstellbar ist in eine Injektorstellung, in der es den Aufbereitungstank **102** mit einer Zweigleitung **120** verbindet. Die Zweigleitung **120**, die in Richtung **121** durchflossen wird, führt zu einem Injektor **122**. Von diesem führt eine weitere Leitung **124**, durchflossen in Richtung **125**, zum Aufbereitungstank **102** zurück. Eine Gasleitung **126**, durchflossen in Richtung **127**, verbindet den engsten Injektorbereich **123** mit dem Ausgang **128** eines Ozongenerators **130**. Der Eingang **132** des Ozongenerators **130** ist über ein Gasleitung **134**, durchflossen in Richtung **135**, mit einem Ausgang **136** eines Feuchtigkeitswächters **138** verbunden. Der Eingang **140** des Feuchtigkeitswächters **138** ist über eine weitere Gasleitung **142**, durchflossen in Richtung **143**, an den Ausgang **144** eines Lufttrockners **146** angeschlossen Zur Energisierung des Ozongenerators **130** ist ein Hochspannungstransformator **148** vorgesehen. Im weiteren ist ein sogenanntes Ozonvernichtungsgranulat in einer ersten Überdruckventil-Dose **105**, die auf dem Deckel **105a** des Aufbereitungstanks **102** angeordnet ist, vorgesehen, das die Funktion hat zur Entgasung semipermeabel durchlässig zu sein, aber dafür zu sorgen, dass in die Atmosphäre durchtretendes Gas kein Ozon mehr enthält.

Die Teile **128 - 148** bilden zusammen eine Baugruppe **150**, welche ausserdem noch ein EEPROM **151** und einen in einem Prozessor integrierten Microcontroller **152** enthält, auf welche Teile später eingegangen wird.

Die Wirkungsweise der bisher beschriebenen Teile ist die folgende:
Der Aufbereitungstank **102** wird über sein Oeffnung **106** mit Rohwasser **108** aus dem Behälter **110** gefüllt. Das Wasser wird dabei durch die Pumpe **116** über die erste Leitung **112** zum Dreiwegventil **118**, das seine Injektorstellung einnimmt, über den Injektor **122** und über die Leitung **124** zum Aufbereitungstank **102** zurückgeführt. Im engsten Injektorbereich **123** entsteht infolge der hohen Geschwindigkeit ein Unterdruck, so dass Ozon bzw. ein Gasgemisch mit Ozon durch die Gasleitung **126** angesaugt und vermischt mit dem Wasser in den Aufbereitungstank **102** geführt wird. Das Ozon wird durch den vom Hochspannungstransformator **148** energisierten Ozongenerator aus Umgebungsluft erzeugt, welche zuvor den Lufttrockner **146** und den Feuchtigkeitswächter **138** passiert hat.
Sobald das Wasser im Aufbereitungstank genügend ozoniert ist, (3-6 Minuten nach dem Einschalten!), wird dies durch ein zeitabhängiges Signal signalisiert. Nun kann das aufbereitete Wasser aus dem Aufbereitungstank **102** durch die erste Leitung **112** zur Verbraucherstelle **114** gelangen. Ein Verbraucher kann nun solange Trinkwasser konsumieren, als im Aufbereitungstank solches vorhanden ist. Durch das Öffnen der Verbrauchstelle (des Wasserhahns) **114** wird automatisch (mechanisch) auch das Dreiwegeventil **118** umgeschaltet, sodass eine Entnahme möglich ist. Es wir damit verhindert, dass solange das Wasser nicht aufbereitet ist, Wasser an der Verbraucherstelle **114** entnommen werden kann, da die Pumpe **116** durch das Steuer- und Überwachungssystem in diesem Falle automatisch gesperrt wird.

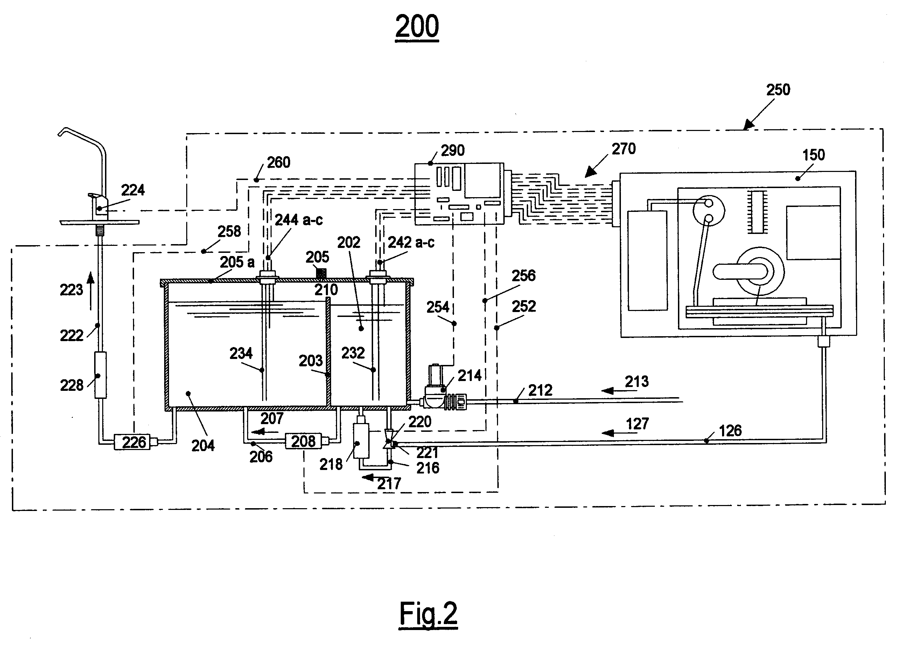

Wird während längerer Zeit kein Trinkwasser konsumiert, findet eine Reozonierung des Wassers im Aufbereitungstank **102** statt. Ausser der Zufuhr des Rohwassers sind alle Vorgänge durch das Steuerungs- und Überwachungssystem gesteuert bzw. geregelt, wie dies später mit Bezug auf **Fig. 2** und eine dort dargestellte Anlage **200** noch beschrieben wird.

Die Anlage der **Fig. 2** weist zusätzlich zu dem Aufbereitungstank **202** einen Vorratstank **204** auf. Beim vorliegenden Ausführungsbeispiel bestehen der Aufbereitungstank **202** und der Vorratstank **204** aus zwei Kammern eines Gesamttanks, zwischen denen eine Trennwand **203** verläuft. Der Aufbereitungstank **202** und der Vorratstank **204** sind einerseits über eine Leitung **206**, durchflossen in Richtung **207** und eine Pumpe **208** aufweisend, andererseits über eine Überlaufleitung bzw. im vorliegenden Ausführungsbeispiel über eine Oeffnung **210** im obersten Bereich der Trennwand **203** verbunden. Ebenfalls ist dafür gesorgt, dass kein Ozon (O ) an die Atmosphäre abgegeben wird. Dazu ist ein Ozonvernichtungsgranulat in einer zweiten Überdruckventil-Dose **205** vorgesehen, die auf dem Deckel **205a** des Vorratstanks **204** vorgesehen ist und die gleiche Funktion erfüllt wie die in Anlage **100** beschriebene erste Überdruckventil-Dose **105**.

Eine Leitung **212**, durchflossen in Richtung **213**, verbindet eine nicht dargestellte Rohwasserquelle über ein Magnetventil **214** mit dem Aufbereitungstank **202**. Im weiteren ist eine Zirkulationsleitung **216**, durchflossen in Richtung **217**, vorgesehen, die beidseitig in den Aufbereitungstank **202** mündet und die eine Pumpe **218** und einen Injektor **220** aufweist. Vom Vorratstank **204** führt eine Leitung **222**, durchflossen in Richtung **223**, zur Verbrauchsstelle **224**. Diese Leitung **222** weist eine Pumpe **226** und einen Karbon- bzw. Aktivkohlefilter **228** auf. Im übrigen besitzt die Anlage **200** eine Baugruppe **150**', die gleich ausgebildet und angeordnet ist wie die Baugruppe **150** der Anlage **100**; der Ausgang des Ozongenerators **130** ist mit dem engsten Injektorbereich **221** verbunden. Alle Teile der Anlage **200** -mit Ausnahme der Verbrauchsstelle **224**- bilden zusammen eine Baugruppe **250**.

Die Wirkungsweise der bisher beschriebenen Teile der Anlage **200** ist die folgende:
Der Aufbereitungstank **202** wird über die Leitung **212** und das offene Magnetventil **214** geschlossen und die Pumpe **218** fördert das Wasser durch die Zirkulationsleitung **216**, wobei auch der Injektor **220** durchströmt wird. Wie mit bezug auf **Fig. 1** weiter oben beschrieben, entsteht durch die Geschwindigkeit im engsten Injektorbereich **221** ein Unterdruck und es wird ein ozonhaltiges Luftgemisch aus der Baugruppe **150**' angesaugt. Die Wirkungsweise der Baugruppe **150**' ist die gleiche wie mit in bezug auf **Fig. 1** bezüglich Baugruppe **150** beschrieben. Sobald das Wasser im Aufbereitungstank **202** genügend ozoniert ist -die Ozonierung wird wie schon zuvor beschrieben, zeitlich überwacht und läuft in der Grössenordnung von 3-5 Minuten ab- wird die Strömung in der Zirkulationsleitung **216** unterbrochen. Die Pumpe **208** fördert nun das aufbereitete Wasser durch die Leitung **206** in den Vorratstank **204**. Ist der Aufbereitungstank praktisch leer, so wiederholt sich der beschriebene Vorgang, bis der Vorratstank **204** gefüllt ist. Besteht nun an der Verbraucherstelle **224** ein Bedarf nach Trinkwasser, so fördert die Pumpe **226** Wasser aus dem Vorratstank **204** über die Leitung **222** zur Verbrauchsstelle **224**, wobei im Karbonfilter restliches Ozon ausgefiltert wird. Falls während längerer Zeit kein Wasser konsumiert wird, so findet -äquivalent wie bei der Anlage **100**- eine Reozonierung statt. Diese wird vorgenommen, indem zuerst das Wasser im Aufbereitungstank **202** reozoniert wird, in genau gleicher Weise wie es bereits bei der Erstozonierung geschehen ist. Dieses reozonierte Wasser wird dann mittels der Pumpe **208** durch die Leitung **206** in den Vorratstank **204** gefördert, wo es sich mit dem vorhandenen Wasser mischt, welches dadurch ebenfalls bis zu einem gewissen Grad reozoniert wird. Das Niveau im Vorratstank **204** steigt dadurch solange an, bis die als Überlaufleitung dienende Öffnung **210** der Trennwand **203** erreicht ist und Wasser in den Aufbereitungstank zurückfliesst. Dieser Vorgang wird solange fortgesetzt, bis das Wasser in beiden Tanks vollständig reozoniert ist.

Der nun folgende Beschreibungsteil bezieht sich auf die Anordnung und die Wirkungsweise der verschiedenen Komponenten des Steuerungs und Überwachungssystems der Anlage **200**. Sämtliche Verbindungen dieses Systems sind in **Fig. 2** mit gestrichelten Linien dargestellt. Alle diese Verbindungen gehen von einer Steuerungsplatine **290** aus. Vorgesehen sind die folgenden Verbindungen: von einer ersten zweistufigen Niveaumessvorrichtung **232** im Aufbereitungstank **202** drei Verbindungen **242a**, **242b** und **242c**; von einer zweiten dreistufigen Niveaumessvorrichtung **234** im Vorratstank **204** drei Verbindungen **244a**, **244b** und **244c**; von der Pumpe **208** eine Verbindung **252**; vom Magnetventil **214** eine Verbindung **254**; von der Pumpe **218** eine Verbindung **256**; von der Pumpe **226** eine Verbindung **258**; von der Verbrauchstelle **224** eine Verbindung **260**; von den Teilen der Baugruppe **150**' eine Vielzahl von Leitungen **270**.

Zusammenfassend lässt sich somit sagen, dass sämtliche Teile der Anlage **200** -mit Ausnahme der unbeweglichen Teile wie Tanks und Leitungen- jeweils eine Komponente des Steuerungs- und Überwachungssystems aufweisen. Diese Komponenten werden im wesentlichen durch bauteilseitige und platinenseitige Elemente gebildet, die durch die jeweiligen Verbindungen miteinander verbunden sind. Alle Teile sind von der Steuerplatine aus aktivierbar, die einerseits zur zeitlich richtigen Abfolge der vorausgesehenen Funktionen und andererseits zur Veranlassung von Korrekturmassnahmen und Sicherheitsmassnahmen dient, welche bei nicht vorausgesehenen Fehlfunktionen ergriffen werden. Zu diesen Massnahmen gehören insbesondere die folgenden:

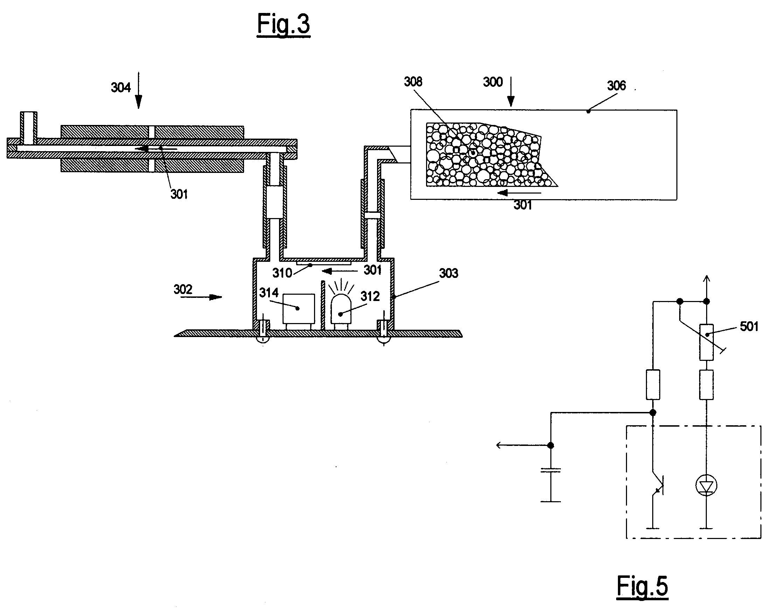

Die weiter unten mit Bezug auf **Fig. 3** ausführlich beschriebene Überwachung der Feuchtigkeit der dem Ozongenerator zugeführten Luft; die Überwachung der Energieversorgung des Ozongenerators vom Hochspannungstransformator, zur Sicherstellung der Ozonproduktion; die Kontrolle des Luftstromes zwischen Ozongenerator und Injektor, zur Sicherstellung der Ozonzufuhr zum Injektor. Eine weitere Sicherheitsüberwachung betrifft die Reozonierung bei Netzausfällen; generell wird nach einem Netzausfall eine Reozonierung vorgenommen; damit aber nicht bei jedem kleinsten Netzausfall eine Reozonierung in Gang gesetzt wird, wird mittels eines Kondensators der letzte Zustand vor dem Ausfall in einem Speicher der Baugruppe **150**' gespeichert. Ist beim Kondensator dann nach einem Netzausfall noch eine Spannung messbar, wenn wieder Spannung am Netz ist, so wird auf eine Reozonierung verzichtet.

Im Zusammenhang mit dem Steuerungs- und Überwachungssystem der Anlage **200** soll noch darauf hingewiesen werden, dass zur Anpassung der Anlage an verschiedene Verhältnisse, wie unterschiedliche Qualität des verfügbaren Rohwassers, unterschiedliche Feuchtigkeit und Temperatur der Umgebungsluft sowie unterschiedliche Anforderungen an das Trinkwasser, gewisse Funktionen der Anlage während einstellbaren Zeiten bzw. Zeitabständen ablaufen bzw. gewisse Sollwerte, mit denen Messwerte verglichen werden, veränderbar sind.

Einen wesentlichen Bestandteil der Anlagen **100** und **200** bilden der Lufttrockner und der Feuchtigkeitswächter.
**Fig. 3** zeigt einen Lufttrockner **300**, einen Feuchtigkeitswächter **302** und einen Ozongenerator **304**, welche in Richtung der Pfeile **301** durchströmt werden. Der Lufttrockner **300** besteht im wesentlichen aus einem länglichen Behälter **306**. Dieser enthält ein geeignetes Adsorptionsmittel **308**, meist in der Form von Pillen oder Granulat-Partikeln. Günstig sind in diesem Zusammenhang Adsorptionsmittel, welche einen Indikatorstoff enthalten, beispielsweise Kobaldchlorid, welcher durch einen Farbumschlag anzeigt, dass das Adsorptionsvermögen kurz vor der Erschöpfung steht und ersetzt werden muss. Wie schon erwähnt, kann ein Adsorptionsmittel gewählt werden, das in einem normalen Haushaltsbackofen regeneriert werden kann, wobei allerdings zu beachten ist, dass gewisse Ofentemperaturen und Regenerierzeiten mindestens annähernd eingehalten werden müssen, da das Adsorptionsmittel sonst einen Teil der Adsorptionsfähigkeit definitiv verliert Die Verwendung von Adsorptionsmitteln, welche einen Farbumschlag erleiden, ist natürlich nur dann sinnvoll, wenn der Behälter **306** mindestens teilweise transparent ist. Eine Komponente des Sicherheits- und Überwachungssystems der Anlage betrifft den Lufttrockner. Nach einem Ersatz des Adsorptionsmittels wird beim Wiedereinschalten der Anlage zuerst geprüft, ob die Luft auch tatsächlich trocken ist; erst wenn dies festgestellt worden ist, beginnt die Ozonproduktion.

Der Feuchtigkeitswächter **302** besteht im wesentlichen aus einer Messdose **303**, die von der getrockneten Luft durchströmt wird. Im Bereich der strömenden Luft ist ein Feuchtigkeitsindikator **310** befestigt; im vorliegenden Ausführungsbeispiel handelt es sich um einen Indikator auf Papierbasis, auch Indikationspapier genannt. Dieses besteht aus saugfähigem Papier, das mit geeigneten Chemikalien imprägniert ist und das, je nach vorhandener Luftfeuchtigkeit und je nach Strömungsgeschwindigkeit der vorbeiströmenden Luft, seine Farbe ändert. Die Messdose **303** enthält im weiteren eine Strahlungsquelle **312**, im vorliegenden Ausführungsbeispiel eine LED (Light Emitter Diode), deren Strahlung auf den Feuchtigkeitsindikator gerichtet ist, und einem Photodetektor zum Feststellen des vom Feuchtigkeitsindikator **310** reflektierten Strahlungsanteils. Der Photodetektor **314** erkennt aufgrund der reflektierten Strahlung die Farbe des Feuchtigkeitsindikators **310** und somit den Grad der Luftfeuchtigkeit. Dem Feuchtigkeitswächter **302** ist eine Komponente des Steuerungs- und Überwachungssystems zugeordnet, mittels welcher die Anlage abgeschaltet wird, sobald der Photodetektor **314** feststellt, dass die vorhandene Luftfeuchtigkeit einen maximal tolerierbaren Wert überschreitet.
Diese Überwachung der Strömungsgeschwindigkeit der Luft und deren Luftfeuchtigkeit ist ein wesentliches Merkmal der Anlagen nach der Erfindung. Vorzugsweise ist der Feuchtigkeitswächter mit einem akustischen und/oder einem optischen Signalgeber verbunden, welche einzeln oder gemeinsam auf die Abschaltung der Anlage aufmerksam machen. Es sei noch darauf hingewiesen, dass die Feuchtigkeitsindikatoren auf Papierbasis von der Norm abweichende Werte liefern, wenn die Temperatur der Luft einen gewissen Bereich über- oder unterschreitet.

Der Ozongenerator **304** ist von einer Bauart wie sie für Ozonierungsanlagen der vorliegenden Art gebräuchlich sind und wird daher nicht weiter beschrieben.

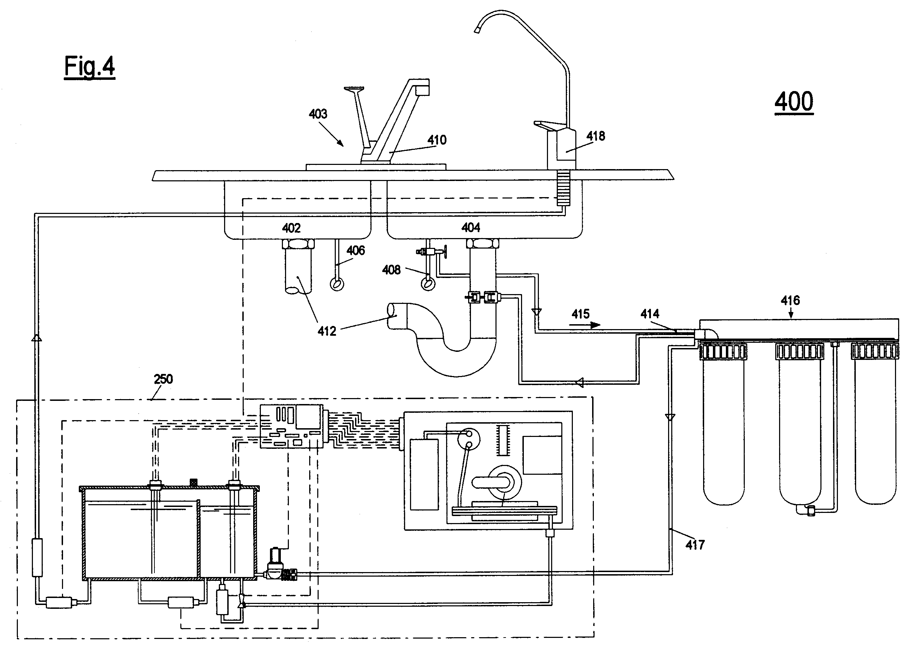

**Fig. 4** zeigt eine vollständige Anlage **400** (Haushaltsanlage) mit einem üblichen Spültisch **403** mit zwei Becken **402** und **404**, einem Warmwasseranschluss **406**, einem Kaltwasseranschluss **408**, einer Mischbatterie **410** und einem Ablaufsystem **412**. Die Anlage **400** dient dazu, eine mehrstufige Aufbereitung des Rohwassers durchzuführen, das aus dem als Rohwasserquelle dienenden Kaltwasseranschluss **408** zugeführt wird. Dieses Wasser gelangt über eine Leitung **414**, durchflossen in Richtung **415**, zuerst in eine Umkehrosmose-Einrichtung **416** und anschliessend in eine Ozonierungs-Einrichtung, die der Baugruppe **250** der **Fig. 2** entspricht und auch so bezeichnet ist.
Aus dieser Ozonierung-Einrichtung **250** wird das aufbereitete Waser der Verbrauchstelle **418** zugeführt. Mit **Fig. 4** soll gezeigt werden, dass sich die Baugruppe **250** in einfacher Weise in bestehende Anlagen einbauen lässt, die nur eine umkehrosmotische Aufbereitung des Wassers erlauben, bei denen also die Leitung **417** nicht zur Baugruppe **250** sondern direkt zur Verbraucherstelle **418** führt.

Abschliessend sei nochmals darauf hingewiesen, dass die neuen Anlagen nach der Erfindung nicht nur dank dem Lufttrockner und dem Feuchtigkeitswächter einwandfreies Trinkwasser liefern, sondern dass durch die zahlreichen Komponenten des Steuerungs- und Überwachungssystems sowohl der reguläre Betrieb der Anlagen als auch Massnahmen bei Störungen jeder Art problemlos und sicher gemeistert werden.

**Fig. 5** zeigt einen Detailausschnitt aus dem elektrischen Schema des Feuchtigkeitsindikators **310** (siehe **Fig. 3**) mit einem verstellbaren Potentiometer **501** über das die Schwellwertgrenzen des Photodetektors **314** einstellbar sind.

## Patentansprüche

1. Anlage zur Aufbereitung von Trinkwasser aus Rohwasser, mit einem Aufbereitungstank (**102, 202**) in welchem das Trinkwasser aufbereitet wird; mit einer Rohwasserquelle aus welcher das Rohwasser (**108**) dem Aufbereitungstank (**102, 202**) zugeführt wird; mit einer Leitung (**112, 222**) durch welche das Trinkwasser einer Verbrauchsstelle (**114, 224**) zugeführt wird; mit einem Ozongenerator (**130**) der aus Umgebungsluft Ozon (O ) erzeugt; mit einer Gasleitung (**134**), um das Ozon (O ) dem Aufbereitungstank (**102, 202**) zuzuführen; mit einer der Verbrauchsstelle (**114, 224**) vorgeschalteten Filtervorrichtung (**228**) zum Ausfiltern von Ozon aus dem Trinkwasser; und mit einem Steuerungs- und Überwachungssystem zum Steuern und Überwachen der Anlage,
**gekennzeichet durch**,
- einen dem Ozongenerator (**130**) vorgeschalteten Lufttrockners (**146**), zum Trocknen der dem Ozongenerator (**130**) zugeführten Umgebungsluft,
- einen zwischen dem Lufttrockner (**146**) und dem Ozongenerator (**130**) angeordneten Feuchtigkeitswächter (**138, 302**)
- mit entsprechenden Komponenten des Steuerungs- und Überwachungssystems für den Lufttrockner (**146**) und den Feuchtigkeitswächter (**138, 302**).

2. Anlage nach Anspruch **1**,
**gekennzeichet durch**,
- einen dem Aufbereitungstank (**102, 202**) nachgeschalteten Vorratstank (**204**).

3. Anlage nach Anspruch **1**,
**dadurch gekennzeichet**, dass
die Rohwasserquelle ein Netz ist.

4. Anlage nach Anspruch **1**,
**dadurch gekennzeichet**, dass
der Lufttrockner (**146**) ein Adsorptionstrockner ist.

5. Anlage nach Anspruch **1**,
**dadurch gekennzeichet**, dass
der Feuchtigkeitswächter (**138, 302**) einen Feuchtigkeitsindikator (**310**) zur Anzeige der Luftfeuchtigkeit und einen Detektor (**314**) zum Erfassen der genannten Anzeige umfasst, wobei damit verbundene Mittel zum Abschalten der Anlage vorgesehen sind.

6. Anlage nach Anspruch **5**,
**dadurch gekennzeichet**, dass
der Feuchtigkeitsindikator (**310**) ein Papierindikator mit feuchtigkeitsabhängiger Farbe ist und dass der Detektor (**314**) ein Photodetektor ist, welcher das von einer Lichtquelle (**312**) emittierte und in Abhängigkeit der Farbe reflektierte Licht aufnimmt.

7. Anlage nach Anspruch **1**,
**dadurch gekennzeichet**, dass
das Steuer- und Überwachungssystem eine Komponente aufweist, um den von einem Hochspannungstransformator (**148**) an den Ozongenerator (**130**) gelieferten Strom zu überwachen und gegebenenfalls die Anlage abzuschalten.

8. Anlage nach Anspruch **1**,
**dadurch gekennzeichet**, dass
das Steuer- und Überwachungssystem eine Komponente aufweist, um die dem Aufbereitungstank (**102, 202**) zeitlich zugeführte Menge an Ozon (O ) zu überwachen und gegebenenfalls die Anlage abzuschalten.

9. Anlage nach Anspruch **1**,
**dadurch gekennzeichet**, dass
das Steuer- und Überwachungssystem eine Komponente aufweist, um nach Ablauf einer gewissen Zeit und nach einem Netztausfall dem Aufbereitungstank (**102, 202**) Ozon (O ) zum Reozonieren des Wassers zuzuführen.

10. Anlage nach Anspruch **1**,
**dadurch gekennzeichet**, dass
das Steuer- und Überwachungssystem einen Speicherbaustein (**151**) und einen Microcontroller (**152**) zum Steuern und Überwachen aller Funktionen der Anlage aufweist.

11. Anlage nach Anspruch **1**,
**dadurch gekennzeichet**, dass
der jeweiliege Deckel (**105a, 205a**) des Aufbereitungstankes (**102**, **202**) eine Überdruckventildose (**105, 205**), gefüllt mit Ozonvernichtungsgranulat, das dafür sorgt, dass das überschüssige Ozon (O ) vor dem Austritt in die Atmosphäre neutralisiert wird.

12. Anlage nach Anspruch **1**,
**dadurch gekennzeichet**, dass
das Steuer- und Überwachungssystem eine Komponente aufweist, mittels denen der Durchfluss der Gasleitungen (**126, 134**) überwacht wird, um sicherzustellen, dass Ozongas zur Entkeimung in den Aufbereitungstank (**102, 202**) einfliesst und bei Störung die Anlage (**100, 200, 400**) abschaltet.
